# FASCICULE DE BREVET EUROPEEN

(11) **EP 3 639 202 B1**
(45) Date de publication et mention de la délivrance du brevet: **23.08.2023**
(21) Numéro de dépôt: 18736987.1
(22) Date de dépôt: 01.06.2018
(51) Int. Cl.: G06V 10/143, G06V 20/59

(54) **DISPOSITIF D'IDENTIFICATION D'UN INDICE DE FAMILLE D'HABILLEMENT**
VORRICHTUNG ZUR IDENTIFIZIERUNG EINES KLEIDUNGSFAMILIENINDEX
DEVICE FOR IDENTIFYING A CLOTHING FAMILY INDEX

(30) Priorité: 16.06.2017 FR 1755507
(43) Date de publication de la demande: 22.04.2020
(73) Titulaire: Valeo Systemes Thermiques, 78322 Le Mesnil Saint-Denis Cedex (FR)
(72) Inventeur: NEVEU, Daniel, 78322 Le Mesnil Saint-Denis cedex (FR); GOUR, Josselin, 78322 Le Mesnil Saint-Denis cedex (FR)
(74) Mandataire: Valeo Systèmes Thermiques
(86) Numéro de dépôt international: PCT/FR2018/051270
(87) Numéro de publication internationale: WO 2018/229384

(56) Documents cités:
- DE-A1-102013 001 878
- US-A- 5 145 112
- US-A- 5 555 512

## Description

L'invention concerne un système de gestion thermique pour véhicule automobile. L'invention concerne encore un procédé de gestion thermique mis en oeuvre par un tel système de gestion thermique.

Dans un véhicule automobile, il est connu de prévoir une gestion des débits, températures et répartition de l'air soufflée par les différents aérateurs en fonction des conditions extérieures de température et d'ensoleillement. Sur certains véhicules, cela peut être combiné avec l'activation d'un volant chauffant et/ou d'un siège chauffant ou refroidissant, et parfois de surfaces chauffantes par contact tel qu'un repose coude.

La détection et/ou la prise en compte de l'état thermique des passagers est quasiment inexistante, hormis quelques exemples d'utilisation de capteurs infrarouges qui détectent la température superficielle des vêtements des passagers pour mieux tenir compte des conditions initiale lors de la phase transitoire d'accueil (lorsque la personne vient d'une ambiance froide ou chaude) et de l'équilibre thermique résultant des échanges radiatifs et convectifs. En général la mesure de l'état thermique de l'habitacle se limite à une mesure de températures d'air combinée avec un capteur d'ensoleillement.

Des approches plus sophistiquées de la gestion du confort ont été proposées en s'appuyant sur de nouveaux capteurs, en particulier des caméras infrarouges, et de nouveaux actionneurs, en particulier des panneaux radiants et/ou des apports d'air localisés. Un exemple d'un document qui renseigne la détection des vêtements des passagers est US5555512.

L'invention vise notamment à proposer une amélioration des systèmes de gestion thermiques connus.

Notamment la présente innovation vise la prise en compte de l'habillement dans la gestion du confort. Elle est applicable au contexte d'un véhicule automobile mais peut s'appliquer aussi à des véhicules de transport public où l'on souhaite adapter les paramètres de gestion du confort thermique à l'habillement de chaque passager.

Il est connu que l'habillement réduit les échanges thermiques entre le corps et l'environnement et modifie en conséquence la température d'équilibre du corps et de la peau, pour une activité métabolique et un environnement donnés. Il en résulte une modification des sensations thermiques et du confort thermique, sachant que le confort est pour une large part corrélé à la température de peau des différentes parties du corps.

Les modèles thermo-physiologiques qui décrivent le confort thermique d'une personne, comme le modèle de Fanger, prennent en compte le niveau d'habillement dans le calcul des échanges thermiques. Une unité spécifique est d'ailleurs utilisée pour caractériser le niveau d'habillement d'une personne : le « Clo », qui représente un index du taux d'habillement, lequel varie typiquement dans une plage typique de 0 à 2

L'habillement moyen d'une personne, un pantalon avec une chemise et une veste pour un homme, correspond à 1 Cio. Une personne en maillot de bain aura un index d'habillement de 0.1 à 0.2 Clos. Une personne habillée avec une tenue chaude pour faire du ski aura un index proche de 2 Clos.

La connaissance de cet index d'habillement permet de déterminer l'importance des échanges thermiques du corps avec l'ambiance extérieur et d'en déduire un index de confort. Dans le modèle de Fanger, on réalise un bilan sur l'ensemble de corps en raisonnant sur une température globale moyenne.

On peut citer les demandes de brevet suivantes sur ces aspects : JP2005306095 et US2006144581.

L'invention a ainsi pour objet un dispositif d'identification d'un indice (Clo) de famille d'habillement, indice notamment représentatif du type et du niveau d'habillement d'un passager d'un véhicule automobile, comportant :
- au moins une caméra agencée pour capter au moins une image d'une partie de l'habillement du passager,
- une unité de traitement agencée pour déterminer au moins un indice (Clo) de famille d'habillement en utilisant un algorithme de reconnaissance basé sur un modèle de type réseau de neurones, notamment entrainé sur une bibliothèque d'images représentatives captées par la caméra, images de préférence préalablement catégorisées par un opérateur humain.

L'avantage d'une telle méthode d'identification est notamment de s'affranchir de l'intervention des passagers pour décrire leur habillement et de pouvoir enrichir et améliorer la robustesse de l'identification sur la base du retour d'expérience. Elle permet aussi de prendre en compte une très grande variété de situations et de types d'habillement par le pouvoir associatif et de classification d'un apprentissage par réseau de neurones.

Le réseau de neurones artificiel, en tant que système capable d'apprendre, met en oeuvre le principe de l'induction, c'est-à-dire l'apprentissage par l'expérience. Le réseau de neurones est généralement utilisé dans des problèmes de nature statistique, tels que la classification automatique.

Selon un aspect de l'invention, la caméra est une caméra fonctionnant dans le proche infrarouge notamment dans une bande de sensibilité du rayonnement entre 0.5 et 1 µm.

Cette bande permet de visualiser les passagers de jour ou de nuit, et sans gêne visuelle pour les passagers. Cette caméra est notamment de type NIR (Near Infra Red) muni de lampes illuminatrices.

En variante, la caméra est une caméra thermique infrarouge, dite en anglais LWIR (Long Wave Infra-Red), fonctionnant dans la bande de longueur d'onde 8 à 13 µm, ou une caméra visible classique, ou encore les images fournies par la combinaison de plusieurs caméras, par exemple une caméra NIR et une caméra LWIR.

Selon un aspect de l'invention, la position, l'orientation et l'angle de vue du ou des caméras sont choisis pour qu'une partie au moins de l'habillement des personnes analysées soit dans le champ de chaque caméra.

Selon un aspect de l'invention, la caméra est disposée frontalement face à un passager, par exemple sur la planche de bord pour les passagers avant. Dans ce cas, la caméra est agencée de manière à ce que l'habillement du haut du corps - à savoir typiquement le col, le crane et si possible les épaules - soit visible.

Selon un aspect de l'invention, la caméra est disposée dans un module, notamment un module de type dôme, fixé au plafond de l'habitacle. Dans ce cas, la caméra est agencée pour observer plusieurs personnes dans son champ. La caméra est agencée pour visualiser une partie de leur habillement, en particulier la partie haute du corps.

Selon un aspect de l'invention, la caméra est disposée dans un montant latéral du véhicule (ce montant est aussi appelé pilier -pilier avant ou milieu). Dans ce cas, la caméra est agencée pour observer plusieurs personnes et pour visualiser la partie haute du corps, notamment le torse et la tête, soit bien dans le champ.

Selon un aspect de l'invention, dans le cas où plusieurs caméras sont utilisées, elles peuvent être disposées au même endroit pour observer un passager. On peut par exemple avoir une caméra, notamment une caméra NIR, face au visage du conducteur, derrière le volant, et une caméra, notamment une caméra IR, disposée dans un plafonnier au niveau du plafond.

Selon un aspect de l'invention, les images de la bibliothèque sont classées par famille d'habillement.

Selon un aspect de l'invention, la reconnaissance du niveau d'habillement à partir des images fournies par la ou les caméras, en utilisant un algorithme de reconnaissance basé sur un modèle de type « réseau de neurones » qui aura été préalablement entrainé sur une bibliothèque d'images représentatives et catégorisées dans une ou plusieurs familles d'habillement. Le modèle est alors capable de catégoriser chaque image reçue en lui affectant une ou plusieurs familles d'habillement.

Selon un aspect de l'invention, une famille d'habillement est représentative d'un type et niveau d'habillement. La bibliothèque comprend par exemple quatre familles pour décrire l'habillement, par exemple en termes de couches sur le buste :
- absence de couche, par exemple torse-nu : l'indice Clo vaut nClo1, par exemple égal à 0.2
- couche légère, par exemple correspondant à un tee shirt ou une chemise ou un débardeur : l'indice Clo vaut nClo2, par exemple égal à 0.5
- couche intermédiaire, par exemple correspondant à un pull ou une veste : l'indice Clo vaut nClo3, par exemple égal à 1
- une couche chaude, par exemple correspondant à un manteau ou une doudoune : l'indice Clo vaut nClo4, par exemple égal à 1.5.

Selon un aspect de l'invention, le nombre de familles pour le buste peut être compris entre 2 et 6, et le nombre de familles pour les jambes peut être compris entre 2 et 4.

Selon un aspect de l'invention, les familles pour les jambes sont par exemple :
- Short
- Jupe courte
- Jupe longue
- Pantalon.

Selon un aspect de l'invention, une famille peut être prévue pour décrire des accessoires :
- Pas d'écharpe
- Une écharpe
- Un bonnet
- Un chapeau.

Selon un aspect de l'invention, chaque image de la bibliothèque peut être catégorisée dans plusieurs familles selon les informations exploitables.

Quelque soit la qualité et la richesse de la phase d'apprentissage, il n'est statistiquement pas possible d'avoir un modèle avec 100% de fiabilité. L'invention vise à atteindre un maximum de fiabilité grâce à une stratégie pour gérer le risque d'erreur et enrichir et fiabiliser le modèle.

Selon un aspect de l'invention, l'unité de traitement est agencée pour :
- déterminer un taux de confiance sur la reconnaissance d'une famille,
- lorsque ce taux de confiance est supérieur à un seuil prédéterminé, par exemple un seuil de 90%, valider l'indice d'habillement sans intervention du passager,
- éventuellement informer le passager du ou des familles sélectionnées pour gérer son confort.

Selon un aspect de l'invention, si le taux de confiance est inférieur à un seuil prédéterminé, par exemple un seuil de 50%, l'unité de traitement est agencée pour requérir par défaut une validation du choix de la famille par le passager pour activer la gestion du confort en conséquence.

Selon un aspect de l'invention, si le taux de confiance est dans une plage intermédiaire, entre les deux seuils précités, l'unité de traitement est agencée pour laisser la possibilité au passager de modifier la famille si nécessaire.

La catégorisation ou la correction des familles associées à de nouvelles images sont utilisées, le cas échéant, pour enrichir la bibliothèque d'images servant à entrainer le modèle. Une mise à jour du modèle est réalisée par un nouvel apprentissage lorsque la bibliothèque d'images aura été modifiée significativement.

Selon un aspect de l'invention, dans le cas où plusieurs caméras sont utilisées, différentes stratégies sont possibles pour tirer partie de la combinaison des différentes caméras.

Chaque caméra peut être associé à un modèle de reconnaissance qui lui est propre et catégoriser les images reçues indépendamment des autres caméras.

Selon un aspect de l'invention, la combinaison de règles logiques et statistiques peut permettre alors de générer une catégorisation avec un taux de confiance le plus élevé, en combinant la catégorisation et taux de confiance de chacune des caméras disponibles.

Il est également possible de générer une bibliothèque d'images en fusionnant les données venant des diverses caméras et entrainer le modèle en catégorisant chaque situation à partir des images de plusieurs caméras.

Lorsque les caméras utilisées génèrent un flux vidéo avec par exemple plusieurs images par seconde, il est possible d'exploiter des images prises à divers instants pour catégoriser un passager en exploitant la redondance des mesures.

Selon un aspect de l'invention, l'unité de traitement peut être agencée pour exploiter le modèle sur plusieurs images prises à des intervalles réguliers, en analysant la cohérence entre les différentes catégorisations retournées et les taux de confiance associés. Une approche statistique mise en oeuvre par l'unité de traitement (occurrences d'une catégorisation avec le taux de confiance cumulé le plus élevé) peut permettre de définir la catégorisation qui présente le meilleur taux de confiance.

Selon un aspect de l'invention, une étape additionnelle mise en oeuvre par l'unité de traitement permet de moduler le taux de confiance associé à une catégorisation en fonction de l'occurrence statistique d'une famille en fonction d'autres paramètres contextuels.

L'occurrence de chaque famille d'habillement peut être pondérée en fonction de divers paramètres :
- La saison : faible occurrence « couche chaude, écharpe.. » pour l'été ; faible occurrence « couche légère » pour l'hiver, etc...
- Le lieu : faible occurrence « torse nue » si pas de plage ou plan d'eau à proximité, faible occurrence « écharpe » si démarrage en parking couvert, etc...

Selon un aspect de l'invention, la catégorisation est associée pour partie à une échelle d'isolation thermique d'une partie du corps, notamment le buste ou les jambes, sur une échelle progressive de 1 à N, N notamment supérieur ou égal à 4.

Selon un aspect de l'invention, la catégorisation retenue prend en compte la date, heure et lieu des prises de vue pour pondérer le taux de confiance affecté à chaque catégorie d'habillement en fonction de leur occurrence statistique vis-à-vis des paramètres précités.

Selon un aspect de l'invention, l'unité de traitement est agencée pour :
- prendre en compte les résultats obtenus sur plusieurs images pour identifier le résultat le plus probant par analyse statistique des occurrences et taux de confiance des résultats,
- optionnellement, prendre en compte d'autres paramètres contextuels permettant de renforce la probabilité statistique d'un résultat, tel que la température extérieure ou la localisation du véhicule.

L'invention a encore pou objet un procédé d'identification d'un indice (Clo) de famille d'habillement, indice notamment représentatif du type et du niveau d'habillement d'un passager d'un véhicule automobile, comportant les étapes suivantes :
- capter au moins une image d'une partie de l'habillement du passager,
- déterminer au moins un indice (Clo) de famille d'habillement en utilisant un algorithme de reconnaissance basé sur un modèle de type réseau de neurones, notamment entrainé sur une bibliothèque d'images représentatives captées par la caméra, images de préférence préalablement catégorisées par un opérateur humain.

L'invention sera mieux comprise et d'autres détails, caractéristiques et avantages de l'invention apparaîtront à la lecture de la description suivante faite à titre d'exemple non limitatif en référence au dessin annexé dans lequel :
- la figure 1 illustre, schématiquement et partiellement, un dispositif selon l'invention,
- la figure 2 illustre des échanges de données en lien avec le dispositif de la figure 1,
- la figure 3 représente des photos de la bibliothèque utilisée par le dispositif de la figure 1.

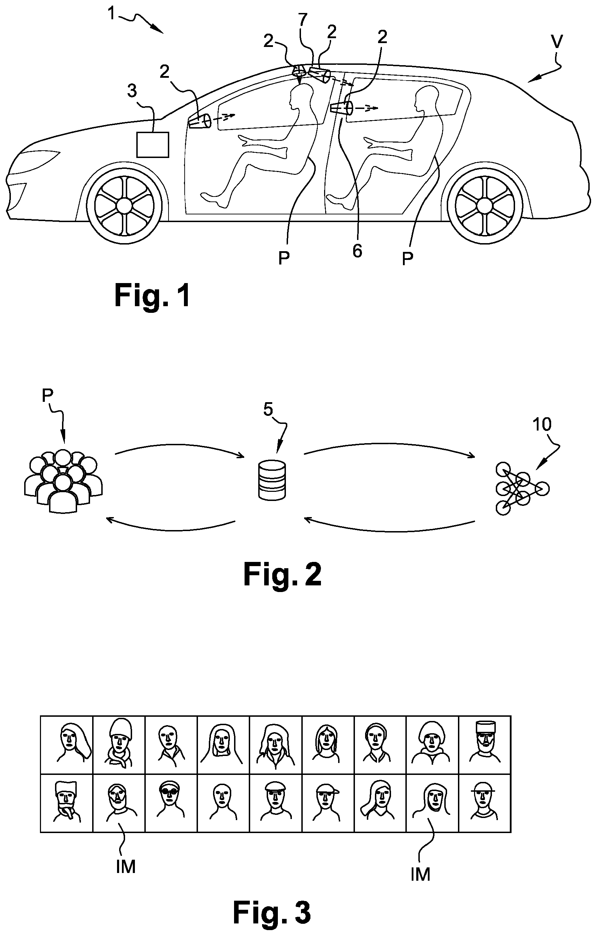

On a représenté sur la figure 1 un dispositif 1 d'identification d'un indice (Clo) de famille d'habillement, indice représentatif du type et du niveau d'habillement d'un passager d'un véhicule automobile V, comportant :
- une pluralité de caméras 2 agencées pour capter des images IM d'une partie de l'habillement d'un passager P,
- une unité de traitement 3 agencée pour déterminer un indice (Clo) de famille d'habillement en utilisant un algorithme de reconnaissance basé sur un modèle de type réseau de neurones, en lien avec une bibliothèque 5 d'images IM représentatives captées par la caméra.

L'une des caméras 2 est une caméra NIR fonctionnant dans le proche infrarouge notamment dans une bande de sensibilité du rayonnement entre 0.5 et 1 µm.

Une autre caméra 2 est une caméra infrarouge longue onde ou an anglais LWIR (Long Wave Infra-Red) fonctionnant dans la bande 8 à 2 µm.

D'autres types de caméras sont bien entendu utilisables.

La position, l'orientation et l'angle de vue du ou des caméras 2 sont choisis pour qu'une partie au moins de l'habillement des personnes P analysées soit dans le champ de chaque caméra.

L'une des caméras 2 est disposée frontalement face à un passager, par exemple sur la planche de bord pour les passagers avant. Dans ce cas, la caméra est agencée de manière à ce que l'habillement du haut du corps - à savoir typiquement le col, le crane et si possible les épaules - soit visible.

L'une des autres caméras 2 est disposée dans un module, notamment un module de type dôme, fixé au plafond 7 de l'habitacle. Dans ce cas, la caméra est agencée pour observer plusieurs personnes P dans son champ. La caméra est agencée pour visualiser une partie de leur habillement, en particulier la partie haute du corps.

L'une des autres caméras est disposée dans un montant latéral 6 du véhicule (ce montant est aussi appelé pilier -pilier avant ou milieu).

Les caméras 2 peuvent être disposées au même endroit pour observer un passager. On peut par exemple avoir une caméra, notamment une caméra NIR, face au visage du conducteur, derrière le volant, et une caméra, notamment une caméra IR, disposée dans un plafonnier au niveau du plafond.

Les images de la bibliothèque 5 sont classées par famille d'habillement.

Comme illustré sur la figure 2, la reconnaissance du niveau d'habillement à partir des images fournies par la ou les caméras 2, en utilisant un algorithme de reconnaissance basé sur un modèle 10 de type « réseau de neurones » qui aura été préalablement entrainé sur une bibliothèque d'images 5 représentatives et catégorisées dans une ou plusieurs familles d'habillement. Le modèle est alors capable de catégoriser chaque image reçue en lui affectant une ou plusieurs familles d'habillement.

Une famille d'habillement est représentative d'un type et niveau d'habillement. La bibliothèque 5 comprend par exemple quatre familles pour décrire l'habillement, par exemple en termes de couches sur le buste :
- absence de couche, par exemple torse-nu : l'indice Clo vaut nClo1, par exemple égal à 0.2
- couche légère, par exemple correspondant à un tee shirt ou une chemise ou un débardeur : l'indice Clo vaut nClo2, par exemple égal à 0.5
- couche intermédiaire, par exemple correspondant à un pull ou une veste : l'indice Clo vaut nClo3, par exemple égal à 1
- une couche chaude, par exemple correspondant à un manteau ou une doudoune : l'indice Clo vaut nClo4, par exemple égal à 1.5.

Le nombre de familles pour le buste peut être compris entre 2 et 6, et le nombre de familles pour les jambes peut être compris entre 2 et 4.

Selon un aspect de l'invention, les familles pour les jambes sont par exemple :
- Short
- Jupe courte
- Jupe longue
- Pantalon.

Selon un aspect de l'invention, une famille peut être prévue pour décrire des accessoires :
- Pas d'écharpe
- Une écharpe
- Un bonnet
- Un chapeau.

L'unité de traitement 3 est agencée pour :
- déterminer un taux de confiance sur la reconnaissance d'une famille,
- lorsque ce taux de confiance est supérieur à un seuil prédéterminé, par exemple un seuil de 90%, valider l'indice d'habillement sans intervention du passager,
- éventuellement informer le passager du ou des familles sélectionnées pour gérer son confort.

Selon un aspect de l'invention, si le taux de confiance est inférieur à un seuil prédéterminé, par exemple un seuil de 50%, l'unité de traitement est agencée pour requérir par défaut une validation du choix de la famille par le passager pour activer la gestion du confort en conséquence.

Selon un aspect de l'invention, si le taux de confiance est dans une plage intermédiaire, entre les deux seuils précités, l'unité de traitement est agencée pour laisser la possibilité au passager de modifier la famille si nécessaire.

Chaque caméra peut être associé à un modèle de reconnaissance qui lui est propre et catégoriser les images reçues indépendamment des autres caméras.

Selon un aspect de l'invention, la combinaison de règles logiques et statistiques peut permettre alors de générer une catégorisation avec un taux de confiance le plus élevé, en combinant la catégorisation et taux de confiance de chacune des caméras disponibles.

Il est également possible de générer une bibliothèque d'images en fusionnant les données venant des diverses caméras et entrainer le modèle en catégorisant chaque situation à partir des images de plusieurs caméras.

Lorsque les caméras utilisées génèrent un flux vidéo avec par exemple plusieurs images par seconde, il est possible d'exploiter des images prises à divers instants pour catégoriser un passager en exploitant la redondance des mesures.

Une étape additionnelle mise en oeuvre par l'unité de traitement permet de moduler le taux de confiance associé à une catégorisation en fonction de l'occurrence statistique d'une famille en fonction d'autres paramètres contextuels.

## Revendications

1. Dispositif d'identification d'un indice (Clo) de famille d'habillement, indice notamment représentatif du type et du niveau d'habillement d'un passager d'un véhicule automobile, comportant :
- au moins une caméra (2) agencée pour capter au moins une image d'une partie de l'habillement du passager (P),
- une unité de traitement (3) agencée pour déterminer au moins un indice (Clo) de famille d'habillement en utilisant un algorithme de reconnaissance basé sur un modèle de type réseau de neurones, notamment entrainé sur une bibliothèque (5) d'images représentatives captées par la caméra, images de préférence préalablement catégorisées par un opérateur humain, cette unité de traitement étant en outre agencée pour :
o déterminer un taux de confiance sur la reconnaissance d'une famille,
o moduler le taux de confiance associé à une catégorisation en fonction de l'occurrence statistique d'une famille en fonction d'autres paramètres contextuels,
o lorsque ce taux de confiance est supérieur à un seuil prédéterminé, par exemple un seuil de 90%, valider l'indice d'habillement sans intervention du passager,
o éventuellement informer le passager du ou des familles sélectionnées pour gérer son confort.

2. Dispositif selon la revendication précédente, la caméra étant une caméra fonctionnant dans le proche infrarouge (NIR) notamment dans une bande de sensibilité du rayonnement entre 0.5 et 1 µm.

3. Dispositif selon la revendication 1, la caméra étant une caméra thermique infrarouge fonctionnant dans la bande de longueur d'onde 8 à 13 µm, ou une caméra visible classique, ou encore les images fournies par la combinaison de plusieurs caméras, par exemple une caméra NIR et une caméra LWIR.

4. Dispositif selon l'une des revendications précédentes, la caméra étant disposée frontalement face à un passager, par exemple sur la planche de bord pour les passagers avant. Dans ce cas, la caméra est agencée de manière à ce que l'habillement du haut du corps - à savoir typiquement le col, le crane et si possible les épaules - soit visible.

5. Dispositif selon l'une des revendications précédentes, les images (IM) de la bibliothèque (5) étant classées par famille d'habillement.

6. Dispositif selon l'une des revendications précédentes, la bibliothèque comprenant quatre familles pour décrire l'habillement, par exemple en termes de couches sur le buste :
- absence de couche, par exemple torse-nu : l'indice Clo vaut nClo1, par exemple égal à 0.2
- couche légère, par exemple correspondant à un tee shirt ou une chemise ou un débardeur : l'indice Clo vaut nClo2, par exemple égal à 0.5
- couche intermédiaire, par exemple correspondant à un pull ou une veste : l'indice Clo vaut nClo3, par exemple égal à 1
- une couche chaude, par exemple correspondant à un manteau ou une doudoune : l'indice Clo vaut nClo4, par exemple égal à 1.5.

7. Dispositif selon l'une des revendications précédentes, le nombre de familles pour le buste étant compris entre 2 et 6, et le nombre de familles pour les jambes peut être compris entre 2 et 4.

8. Dispositif selon l'une des revendications 6 et 7, les familles pour les jambes sont :
- Short
- Jupe courte
- Jupe longue
- Pantalon.

9. Dispositif selon l'une des revendications précédentes, une famille étant prévue pour décrire des accessoires :
- Pas d'écharpe
- Une écharpe
- Un bonnet
- Un chapeau.

## Patentansprüche

1. Vorrichtung zur Identifizierung eines Kleidungsfamilienindexes (Clo), wobei der Index insbesondere für die Kleidungsart und den Kleidungsumfang eines Insassen eines Kraftfahrzeugs repräsentativ ist, umfassend:
- mindestens eine Kamera (2), die dazu eingerichtet ist, mindestens ein Bild eines Teils der Kleidung des Insassen (P) zu erfassen,
- eine Verarbeitungseinheit (3), die dazu eingerichtet ist, mindestens einen Kleidungsfamilienindex (Clo) zu bestimmen, indem sie einen Erkennungsalgorithmus verwendet, der auf einem Modell vom Typ neuronales Netzwerk basiert, das insbesondere mit Hilfe einer Bibliothek (5) von repräsentativen Bildern, die von der Kamera erfasst wurden, trainiert wurde, wobei die Bilder vorzugsweise im Vorfeld von einem menschlichen Bediener kategorisiert wurden, wobei diese Verarbeitungseinheit ferner zu Folgendem eingerichtet ist:
o Bestimmen eines Konfidenzniveaus bei der Erkennung einer Familie,
o Verändern des mit einer Kategorisierung assoziierten Konfidenzniveaus in Abhängigkeit von dem statistischen Auftreten einer Familie in Abhängigkeit von anderen Kontextparametern,
o wenn dieses Konfidenzniveau größer ist als ein vorbestimmter Schwellenwert, beispielsweise ein Schwellenwert von 90 %, Validieren des Kleidungsindexes ohne ein Eingreifen des Insassen,
o eventuell Informieren des Insassen über die eine oder die mehreren Familien, die zur Steuerung seines Komforts ausgewählt wurden.

2. Vorrichtung nach dem vorhergehenden Anspruch, wobei die Kamera eine Kamera ist, die im nahen Infrarot (NIR) arbeitet, insbesondere in einem Empfindlichkeitsband der Strahlung zwischen 0,5 und 1 µm.

3. Vorrichtung nach Anspruch 1, wobei die Kamera eine Infrarotwärmekamera, die in dem Wellenlängenband von 8 bis 13 µm arbeitet, oder eine klassische sichtbare Kamera ist oder aber die Bilder, die durch das Kombinieren mehrerer Kameras, beispielsweise einer NIR-Kamera und einer LWIR-Kamera, bereitgestellt werden.

4. Vorrichtung nach einem der vorhergehenden Ansprüche, wobei die Kamera frontal gegenüber einem Insassen, beispielsweise auf dem Armaturenbrett für die vorderen Insassen, angeordnet ist. In diesem Fall ist die Kamera so eingerichtet, dass die Kleidung des oberen Teils des Körpers - also typischerweise des Halses, des Kopfes und, soweit möglich, der Schultern - sichtbar ist.

5. Vorrichtung nach einem der vorhergehenden Ansprüche, wobei die Bilder (IM) der Bibliothek (5) nach Kleidungsfamilie geordnet sind.

6. Vorrichtung nach einem der vorhergehenden Ansprüche, wobei die Bibliothek vier Familien beinhaltet, um die Kleidung zu beschreiben, beispielsweise im Hinblick auf Schichten auf dem Oberkörper:
- keinerlei Schicht, beispielsweise nackter Oberkörper: der Clo-Index entspricht nClo1, ist beispielsweise gleich 0, 2,
- leichte Schicht, die beispielsweise einem T-Shirt oder einem Hemd oder einem Top entspricht: der Clo-Index entspricht nClo2, ist beispielsweise gleich 0,5,
- mittlere Schicht, die beispielsweise einem Pullover oder einer Jacke entspricht: der Clo-Index entspricht nClo3, ist beispielsweise gleich 1,
- warme Schicht, die beispielsweise einem Mantel oder einer Daunenjacke entspricht: der Clo-Index entspricht nClo4, ist beispielsweise gleich 1,5.

7. Vorrichtung nach einem der vorhergehenden Ansprüche, wobei die Anzahl von Familien für den Oberkörper zwischen 2 und 6 beträgt und die Anzahl von Familien für die Beine zwischen 2 und 4 betragen kann.

8. Vorrichtung nach einem der Ansprüche 6 und 7, wobei die Familien für die Beine Folgende sind:
- Shorts,
- kurzer Rock,
- langer Rock,
- Hose.

9. Vorrichtung nach einem der vorhergehenden Ansprüche, wobei eine Familie für die Beschreibung der Accessoires vorgesehen ist:
- kein Schal,
- Schal,
- Mütze,
- Hut.

## Claims

1. Device for identifying a clothing family index (Clo), an index notably representative of the type and of the level of clothing of a passenger of a motor vehicle, comprising:
- at least one camera (2) arranged to pick up at least one image of a part of the clothing of the passenger (P),
- a processing unit (3) arranged to determine at least one clothing family index (Clo) by using a recognition algorithm based on a model of neural network type, notably trained over a library (5) of representative images picked up by the camera, images preferably previously categorized by a human operator, this processing unit also being arranged to:
∘ determine a rate of confidence on the recognition of a family,
∘ modulate the rate of confidence associated with a categorization as a function of the statistical occurrence of a family as a function of other contextual parameters,
∘ when this rate of confidence is above a predetermined threshold, for example a threshold of 90%, validate the clothing index without intervention from the passenger,
∘ possibly inform the passenger of the family or families selected to manage his or her comfort.

2. Device according to the preceding claim, the camera being a camera operating in the near infrared (NIR), notably in a band of sensitivity of radiation between 0.5 and 1 µm.

3. Device according to Claim 1, the camera being a thermal infrared camera operating in the 8 to 13 µm wavelength band, or a conventional visible camera, or even the images supplied by the combination of several cameras, for example an NIR camera and an LWIR camera.

4. Device according to one of the preceding claims, the camera being disposed head-on facing a passenger, for example on the dashboard for the front passengers. In this case, the camera is arranged so that the clothing of the top of the body - namely typically the neck, the head and if possible the shoulders - is visible.

5. Device according to one of the preceding claims, the images (IM) of the library (5) being classified by clothing family.

6. Device according to one of the preceding claims, the library comprising four families for describing the clothing, for example, in terms of layers on the chest:
- absence of layer, for example, bare torso: the Clo index has the value nClo1, for example equal to 0.2
- light layer, for example corresponding to a tee shirt or a shirt or a singlet: the Clo index has the value nClo2, for example equal to 0.5
- intermediate layer, for example corresponding to a pullover or a jacket: the Clo index has the value nClo3, for example equal to 1
- a hot layer, for example corresponding to an overcoat or an anorak: the Clo index has the value nClo4, for example equal to 1.5.

7. Device according to one of the preceding claims, the number of families for the chest lying between 2 and 6, and the number of families for the legs can lie between 2 and 4.

8. Device according to one of Claims 6 and 7, the families for the legs being:
- shorts
- short skirt
- long skirt
- trousers.

9. Device according to one of the preceding claims, a family being provided to describe accessories:
- no scarf
- a scarf
- a bonnet
- a hat.
